# EUROPÄISCHE PATENTANMELDUNG

(11) **EP 3 431 248 A1**
(43) Veröffentlichungstag der Anmeldung: **23.01.2019**
(21) Anmeldenummer: 17182012.9
(22) Anmeldetag: 19.07.2017
(51) Int. Cl.: B29C 45/17, B29C 45/42

(54) **ANORDNUNG MIT EINER ENTNAHMEVORRICHTUNG FÜR EINE SPRITZGUSSMASCHINE**

(71) Anmelder: Geiger, Adolf, 3380 Wangen an der Aare (CH)
(72) Erfinder: Geiger, Adolf, 3380 Wangen an der Aare (CH)
(74) Vertreter: AMMANN PATENTANWÄLTE AG BERN

(57) **Zusammenfassung**

Die Anordnung umfasst eine Entnahmevorrichtung (10) zur Entnahme von Fertigungsteilen aus einer Maschine zum Spritzgiessen, welche eine Schliesseinheit (5) aufweist, und mindestens eine Transportfläche (40), auf welcher Fertigungsteile von einer Abgabestelle (40) zu einer Ausgabestelle (40b) transportierbar sind. Die Transportfläche (40) verläuft oberhalb der Schliesseinheit (5) und in der Längsrichtung (X) der Maschine, in welcher die Form der Schliesseinheit schliess- und offenbar ist.

## Beschreibung

Die vorliegende Erfindung bezieht sich auf eine Anordnung mit einer Entnahmevorrichtung zur Entnahme von Fertigungsteilen aus einer Maschine zum Spritzgiessen.

Spritzgussmaschinen werden seit über dreissig Jahren mit Entnahmevorrichtungen bestückt. Im Betrieb werden mittels eines Handhabungsgeräts Fertigungsteile aus der Spritzgussmaschine entnommen und abgelegt.

Seit Beginn bis heute werden drei Achsen für die Entnahme eingesetzt: eine X-Achse in der Längsrichtung der Spritzgussmaschine für den Entformhub, eine Y-Achse für den Vertikalhub (= Entnahmehub) und eine Z-Achse quer zur Spritzgussmaschine für den Ausquerhub. Diese Ausgestaltung ist kompliziert und macht den Betrieb aufwändig und teuer, insbesondere dann, wenn die Achsen pneumatisch betrieben werden, so dass aufgrund des Luftverbrauches hohe Betriebskosten entstehen.

Die Fertigungsteile werden bis heute immer seitlich der Spritzgussmaschine abgelegt, entweder auf der Bedienerseite oder auf der gegenüberliegenden Seite. Die Ablage erfolgt auf Förderbändern mit entsprechenden Sicherheitsabständen und einer manuellen Abräumtaste am Förderband. Diese seitliche Anordnung bedingt aufwändige und teure Schutzeinhausungen sowie Sicherheitsvorkehrungen wie Türabsicherungen und Überwachungsmassnahmen. Nachteilig ist auch der Platzbedarf für die Schutzeinhausungen.

Aufgabe der vorliegenden Erfindung ist es, eine kompaktere Anordnung zu schaffen, welche eine Entnahmevorrichtung aufweist und einen sicheren Betrieb gewährleistet.

Eine Anordnung, die diese Aufgabe löst, ist im Anspruch 1 angegeben. Die weiteren Ansprüche geben bevorzugte Ausführungen an sowie ein Verfahren zur Entnahme von Fertigungsteilen aus einer Maschine zum Spritzgiessen bzw. zum Nachrüsten einer Maschine.

Durch das Vorsehen mindestens einer Transportfläche, welche oberhalb der Schliesseinheit und in der Längsrichtung der Maschine verläuft, ist eine kompakte Ausgestaltung gegeben. So wird u.a. auf der Bedienerseite der Maschine sowie an der gegenüberliegenden Seite kein Platz für den Transport der Fertigungsteile auf dieser Transportfläche benötigt. Durch die erhöhte Anordnung der Transportfläche ist ein sicherer Betrieb gewährleistet, da selbst ohne zusätzliche Schutzeinhausungen ein ungewollter Zugriff durch Personen verhindert oder zumindest erschwert wird. Es wird auch das Bedienen und Einrichten der Maschine vereinfacht.

Die Anordnung ist vorzugsweise so auslegbar, dass die Fertigungsteile in einer sauberen und verschmutzungsfreien Zone beispielsweise im Bereich der Schutzhaube der Maschine deponiert und bei Bedarf dort zwischengespeichert werden können.

Im Weiteren ist die Anordnung vorzugsweise so auslegar, dass nur zwei Linearachsen vorgesehen werden. Dies vereinfacht die Ausgestaltung, erhöht die Betriebssicherheit und erlaubt es, die Gesamtzykluszeit für die Handhabung eines Fertigungsteils zu verkürzen.

Weitere Konstruktionsmerkmale und deren Vorteile sind aus folgender Beschreibung und Zeichnungen von Ausführungsbeispielen ersichtlich. Es zeigen
Fig. 1 eine Spritzgussmaschine mit einer Entnahmevorrichtung und einer Transportfläche in einer perspektivischen Ansicht,
Fig. 2 in einer Seitenansicht sowie
Fig. 3 in einer Draufsicht,
Fig. 4 zeigt eine perspektivische Detailansicht der Entnahmevorrichtung mit dem Handhabungsgerät,
Fig. 5 zeigt eine perspektivische Detailansicht einer Transportfläche mit den Befestigungsmitteln zur Befestigung an der Maschine, und
Fig. 6 zeigt eine perspektivische Detailansicht einer Transportfläche in Form einer Rutsche im Bereich der Abgabestelle sowie
Fig. 7 im Bereich der Ausgabestelle.

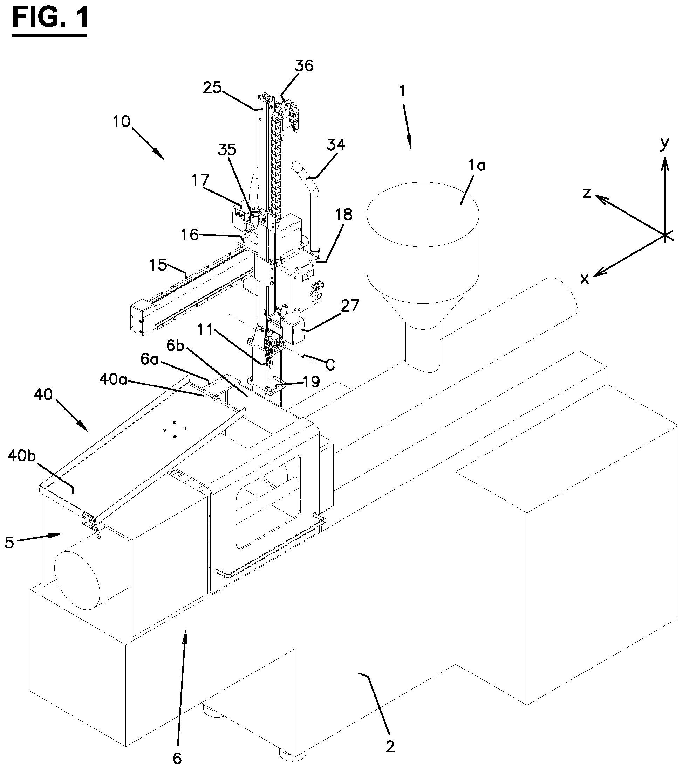

Figuren 1-3 zeigen verschiedene Ansichten einer Spritzgussmaschine (SGM) zusammen mit einer Entnahmevorrichtung 10 und einer Transportfläche 40. Die Maschine weist eine Einspritzeinheit 1 und eine Schliesseinheit 5 auf, die nacheinander in der Längsrichtung der Maschine (hier X-Richtung) auf einem Maschinenbett 2 angeordnet sind. Die Maschine umfasst weiter eine Steuerung, mit welcher die Einheiten 1 und 5 sowie die Entnahmevorrichtung 10 ansteuerbar sind.

Die Einspritzeinheit 1 dient zur Aufnahme des Kunststoffmaterials z. B. in Form eines Granulats, das über einen Einfülltrichter 1a einfüllbar ist, und zum Schmelzen sowie Einspritzen des Kunststoffmaterials in die Schliesseinheit 5. Diese weist eine nicht dargestellte Form ("Werkzeug") auf, die in der Längsrichtung X der Maschine schliess- und offenbar ist und welche die Ausgestaltung des Spritzlings definiert. Nachfolgend wird der Begriff "Fertigungsteil" verwendet. Dieses kann je nach Anwendung z.B. sein:
- Spritzgussteil ohne Anguss,
- Anguss, der vom Spritzgussteil beim Öffnen der Formhälften beziehungsweise beim Auswerfen abgetrennt worden ist ("Tunnelanguss"),
- Spritzgussteil mit Anguss, der noch abzutrennen ist.

Das Fertigungsteil kann nur aus Kunststoff bestehen oder auch aus Kunststoff und einem anderen Material (z.B. in Form eines mit Kunststoff umspritzten Metallkerns).

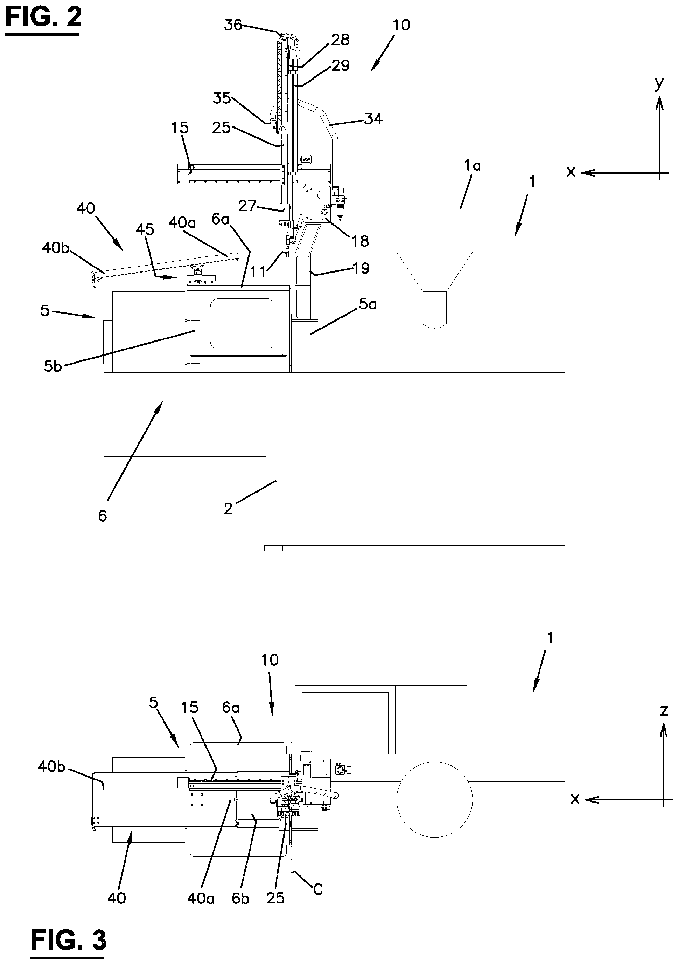

Insbesondere in Fig. 2 sind die Düsenplatte 5a und die relativ dazu, in X-Richtung verschiebbare Mittelplatte 5b angedeutet, an welchen die jeweilige Werkzeugformhälfte befestigbar ist.

Die Schliesseinheit 5 ist durch eine Schutzbehausung 6 abgedeckt. Diese umfasst eine Schutzhaube 6a, die in X-Richtung verschiebbar ist, um den Bereich des Werkzeugs wahlweise abzudecken und freizugeben. Die Schutzhaube 6a weist auf der Oberseite eine Ausnehmung 6b auf, durch welche hindurch bei der abdeckenden Stellung die Entnahmevorrichtung 10 hindurchgreifen kann.

Die Entnahmevorrichtung 10 ist hier zwischen der Form und der Einspritzeinheit 1 angeordnet und weist ein Handhabungsgerät 11 auf, das in der Höhe (hier Y-Richtung) und in der X-Richtung verfahrbar ist. Das Handhabungsgerät 11 ist somit nur in der XY-Ebene linear bewegbar, so dass die Entnahmevorrichtung 10 lediglich mit zwei Linearachsen ausgerüstet ist. Für eine Bewegung in der Ebene brauchen die beiden Linearachsen nicht rechtwinklig zueinander angeordnet zu sein. Beispielsweise kann die Y-Achse einen Verlauf aufweisen, der unter einem Winkel zur Vertikalen angeordnet ist.

Im vorliegenden Ausführungsbeispiel umfasst die erste Linearachse eine in X-Richtung verlaufende Schiene 15, die via eine Anschlusskomponente 18 an einer Säule 19 gehalten ist, welche an der Maschine befestigt ist, z.B. wie hier gezeigt an der Düsenplatte 5a. Die Schiene 15 dient als Linearführung für einen verfahrbaren Schlitten 16, an welchem die zweite Linearachse angeordnet ist. Der Schlitten 16 ist motorbetrieben mittels eines Antriebs 17, z. B. eines Schrittmotors oder Linearmotors. Zur Kraftübertragung auf den Schlitten 16 dienen geeignete Mittel wie beispielsweise Riemen und/oder Zahnstangen.

Die zweite Linearachse umfasst eine am Schlitten 16 gehaltene Linearführung 25, an welchem das Handhabungsgerät 11 mittels eines Antriebs 27, z. B. eines Schrittmotors oder Linearmotors verfahrbar ist, wobei zur Kraftübertragung Riemen, Zahnstangen und/oder andere geeignete Mittel dienen.

Wie oben bereits im Zusammenhang mit den X- und Y-Achsen erwähnt, brauchen die beiden, quer zueinander verlaufenden Linearführungen 15 und 25 nicht unbedingt rechtwinklig zueinander angeordnet zu sein. Vorzugsweise ist der Winkel, um welchen die beiden Linearachsen X und Y von einem rechten Winkel abweichen, im Bereich von 0 bis 45 Grad, besonders bevorzugt 0 bis 20 Grad und/oder 0 bis 10 Grad.

Beim hier dargestellten Ausführungsbeispiel ist das Handhabungsgerät 11 an einer Stange 28 befestigt, welche verfahrbar an der Linearführung 25 angeordnet ist. Die Stange 28 ist hier rohrförmig ausgebildet, um Zuleitungen hindurchführen zu können. Optional ist eine weitere Stange 29 vorgesehen, welche an der Stange 28 befestigt und rohrförmig ausgebildet ist zum Durchführen von Zuleitungen.

Das Handhabungsgerät 11 dient zur Aufnahme mindestens eines Fertigungsteils aus der Form der Schliesseinheit 5 und ist entsprechend dem Anwendungszweck ausgebildet. In den Figuren ist das Handhabungsgerät 11 als Greifer in Form einer Zange dargestellt. Alternativ oder ergänzend kann es auch als Sauger ausgebildet sein, mit welchem ein Unterdruck erzeugbar ist zum Festhalten mindestens eines Fertigungsteils. Das Handhabungsgerät 11 ist pneumatisch und/oder elektrisch betätigbar.

Beim vorliegenden Ausführungsbeispiel weist die Entnahmevorrichtung 10 nebst den beiden Linearachsen X und Y eine Schwenkachse C auf, um welche das Handhabungsgerät 11 schwenkbar ist. Die Schwenkachse C ist hier so angeordnet, dass sie die XY-Ebene rechtwinklig schneidet. Das Handhabungsgerät 11 ist demnach in der XY-Ebene durch Linear- sowie Drehbewegungen verfahrbar. In anderen Ausführungsformen kann die Schwenkachse auch weggelassen sein oder sie kann z.B. in der XY-Ebene liegen, um das Handhabungsgerät 11 quer dazu verschwenken zu können (z.B. Schwenkachse B in Y-Richtung).

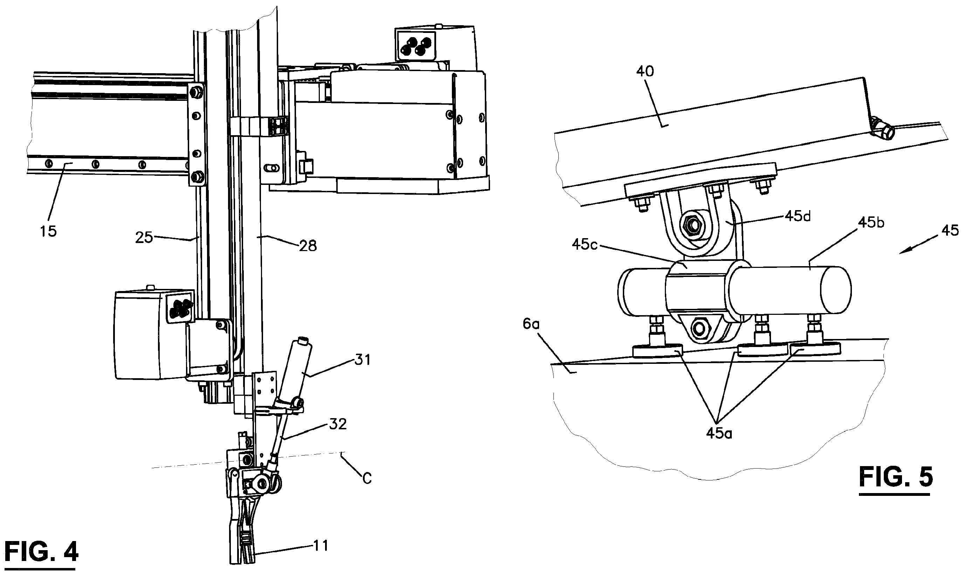

Die Schwenkachse C ist z.B. mittels Motor und/oder - wie insbesondere in Fig. 4 ersichtlich - pneumatisch betreibbar. In dieser Fig. 4 ist ein am Ende der Stange 28 angeordneter, pneumatischer Zylinder 31 dargestellt, dessen Verschiebestange 32 gelenkig an das Handhabungsgerät 11 gekoppelt ist.

Zur Versorgung des Handhabungsgerätes 11 inkl. evtl. daran gekoppelter Antriebsmittel (beispielsweise Zylinder 31) mit elektrischer und/oder pneumatischer Energie sind Zuleitungen 34 vorgesehen, welche von der Anschlusskomponente 18 zu einem Anschlussstück 35 an der Linearführung 25 und von diesem über eine Schleppkette 16 durch die Stange 28 und/oder 29 hindurch zur Stelle führen, wo das Handhabungsgerät 11 geordnet ist.

Die Entnahmevorrichtung 10 weist weiter eine Steuerung auf, die programmierbar ist, um die Bewegung der beiden Linearachsen X und Y sowie, falls vorgesehen, der Schwenkachse(n) für den gewünschten Einsatzzweck vorzugeben.

Es ist weiter mindestens eine Transportfläche 40 vorgesehen, welche zum Transportieren der Fertigungsteile von einer Abgabestelle 40a, wo die Fertigungsteile von der Entnahmevorrichtung 10 abgelegt werden, zu einer Ausgabestelle 40b dient, wo die Fertigungsteile entnommen werden können. Die Transportfläche 40 ist in der Flucht der Einspritzeinheit 1 angeordnet und ist hier im Wesentlichen rechteckig ausgebildet. Die Transportfläche 40 verläuft oberhalb der Schliesseinheit 5 und in Längsrichtung X der Maschine, d.h. in der Richtung, in welcher die Form offen- und schliessbar ist.

In der Draufsicht gesehen (vgl. Fig. 3) ist die Transportfläche 40 so ausgeordnet, dass sie sich innerhalb des Grundrisses der Maschine befindet, wobei allenfalls das ausgabeseitige Ende der Transportfläche 40 über die Maschine hinausragt. Die Ausdehnung der Transportfläche 40 quer zur Längsrichtung X ist somit kleiner als die Maschine.

Hier dient eine Rutsche 40 als Transportfläche. Alternativ oder ergänzend kann diese auch ein Transportband enthalten. Die Rutsche 40 ist hier an der Schutzhaube 6a befestigt und mit dieser zusammen in der Längsrichtung X verschiebbar. Je nach der Auslegung der Maschine ist es auch denkbar, die Rutsche 40 an einer anderen Stelle zu befestigen, welche auch stehend sein kann.

Zur Befestigung der Rutsche 40 dienen Befestigungsmittel 45 mit z.B. Magneten, welche an der Maschine, z.B. der Schutzhaube 6a haften. Dadurch ist es insbesondere bei einem Nachrüsten mit der vorliegenden Entnahmevorrichtung 10 nicht erforderlich, die Maschine mit Löchern oder drgl. zu versehen.

Eine mögliche Ausführungsform geeigneter Befestigungsmittel 45 ist in Fig. 5 ersichtlich, welche an der Schutzhaube 6a anliegende Magnete 45a zeigt. Diese sind über ein Rundelement 45b mit einer Klemmhülse 45c an einem an der Rutsche 40 befestigten Fortsatz 45d gekoppelt. Im nicht-festgeschraubten Zustand sind die Klemmhülse 45c um die Längsachse des Rundelements 45b und der Fortsatz 45d relativ zur Klemmhülse 45c drehbar. Dadurch ist die Neigung der Rutsche 40 quer zur Längsrichtung X sowie in der Längsrichtung X einstellbar.

Es sind auch andere Befestigungsmittel geeignet, um die Neigung der Rutsche 40 in zwei Richtungen einstellen zu können, beispielsweise zwei nebeneinander angeordnete Stützen, die einzeln höhenverstellbar sind.

Die Rutsche 40 weist eine glatte Oberfläche auf, so dass die Fertigungsteile aufgrund der Schwerkraft unbehindert zur Ausgabestelle 40b gleiten können, und ist z.B. aus eloxiertem Aluminiumblech gefertigt.

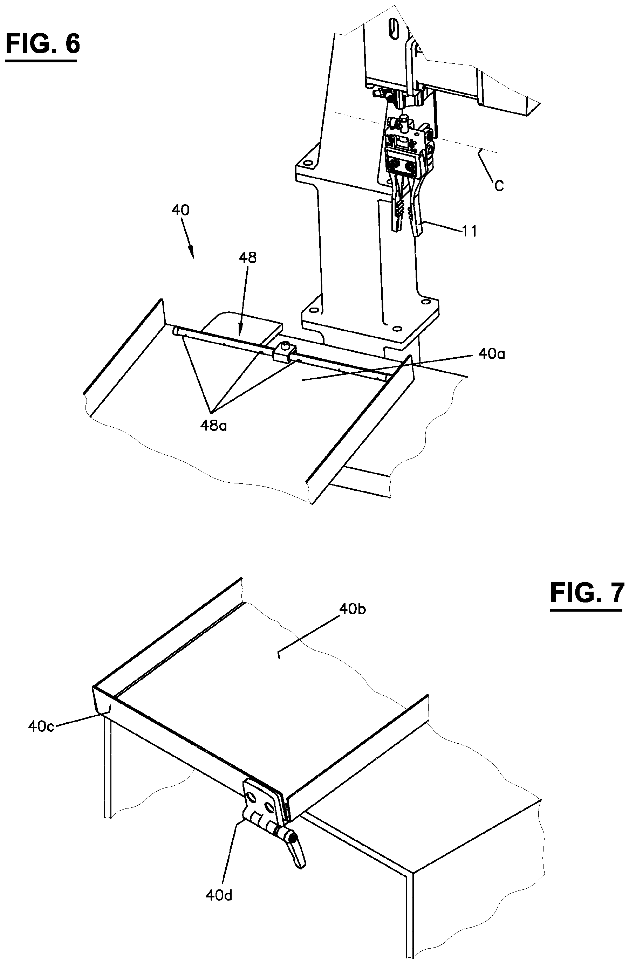

Bei Bedarf können Fördermittel vorgesehen sein, um Fertigungsteile von der Abgabestelle 40a wegzubefördern. Dies ist z.B. dann angezeigt, wenn die wählbare Neigung der Rutsche 40 zu gering ist, um ein sicheres Wegbefördern aufgrund der Schwerkraft zu gewährleisten. Als Fördermittel ist z.B. Druckluft verwendbar, mittels welcher ein Fertigungsteil von der Abgabestelle 40a wegblasbar ist. In Fig. 6 ist ein Rohr 48 dargestellt, aus welchem durch eine oder mehrere Düsenöffnungen 48a Luft ausströmbar ist, z.B. impulsartig oder auch kontinuierlich.

Anstelle von Druckluft oder ergänzend sind auch andere Fördermittel, insbesondere mechanische denkbar. Beispielsweise können Vibrationsmittel vorgesehen sein, um die Rutsche 40 in Schwingung zu versetzen und/oder ein Schieber, der durch die Abgabestelle 40a hindurchschwenkbar ist, um einem dort sich befindenden Fertigungsteil einen mechanischen Stoss zu versetzen.

Das Ende der Rutsche 40 kann offen oder - wie in Fig. 7 gezeigt - durch eine Abräumklappe 40c wahlweise offen- und schliessbar sein. Befestigungsmittel z.B. in Form eines Kippklemmhebels 40d oder drgl. können vorgesehen sein, um die Abräumklappe 40c in der Schliessstellung zu befestigen.

Ein möglicher Verfahrensablauf ist wie folgt:
Das Handhabungsgerät 1 befindet sich in der Warteposition oberhalb der Form der Schliesseinheit 5. Ist ein Fertigungsteil fertig gespritzt, wird es mittels des Handhabungsgeräts 11 aus der geöffneten Form entnommen und auf die Abgabestelle 40a der Transportfläche 40 abgelegt, welche auf dem höheren Niveau angeordnet ist. Dabei kann das Fertigungsteil auf einer Bewegungsbahn bewegt werden, welche nicht in drei Achsen, sondern in einer Ebene liegt. Eine möglicher Ablauf der Hubbewegungen des Handhabungsgeräts 11 aus der Warteposition ist beispielsweise: Vertikalhub in der Z-Achse und Entformhub in der X-Achse für die Aufnahme des Fertigungsteils, Vertikalhub in der Z-Achse und Ablegehub in der X-Achse für die Ablage des Fertigungsteils. Gegebenenfalls erfolgt zur Ablage auch eine Drehung um die C-Achse.

Das Fertigungsteil wird dann auf der Transportfläche 40 aufgrund der Schwerkraft und/oder mittels Fördermittel von der Abgabestelle 40a zur Ausgabestelle 40b hin bewegt. Ist eine Abräumklappe 40c vorgesehen, kann man eine Anzahl der Fertigungsteile auflaufen lassen, bevor sie durch Öffnen 40c entnommen werden.

Aus der vorangehenden Beschreibung sind dem Fachmann zahlreiche Abwandlungen zugänglich, ohne den Schutzbereich der Erfindung zu verlassen, der durch die Ansprüche definiert ist.

Bei dem hier gezeigten Ausführungsbeispiel befindet sich die Transportfläche 40 über der Schutzbehausung 6 und somit oberhalb der Maschine. Je nach dessen Auslegung erlauben es die Platzverhältnissen gegebenenfalls, die Transportfläche 40 so anzuordnen, dass sie oberhalb der Schliesseinheit 5, jedoch zumindest teilweise unter der Schutzbehausung der Maschine verläuft. Bei der Maschine gemäss Fig. 1 kann z.B. unterhalb der Schutzhaube 6a ein genügender Freiraum vorhanden sein, um dort die Transportfläche anzuordnen.

Bei dem hier gezeigten Ausführungsbeispiel ist nur eine Transportfläche 40 dargestellt und ist somit für die Entnahme einer einzelnen Art an Fertigungsteilen ausgelegt. Insbesondere für Spritzgussmaschinen, bei welchen der Anguss bereits in der Schliesseinheit vom Spritzgussteil abgetrennt wird, kann eine weitere Transportfläche vorgesehen werden. Diese kann z.B. neben der ersten Transportfläche 40 angeordnet werden und parallel dazu verlaufen, oder sie kann z.B. so angeordnet sein, dass sie neben der Abgabestelle 40a der ersten Transportfläche 40 beginnt und dann beispielsweise seitlich weggeht. Es ist auch denkbar, die weitere Transportfläche oberhalb der ersten Transportfläche 40 anzuordnen.

Zur Bildung der weiteren Transportfläche dient eine Rutsche und/oder ein Transportband.

In einer einfachen Ausführungsform ist die in Fig. 1 dargestellte Rutsche 40 mit einer Zwischenwandung versehen, so dass der Boden der Rutsche 40 zwei separate Transportflächen bildet. Gegebenenfalls ist die Abräumklappe 40c so angepasst, dass mittels dieser das ausgabeseitige Ende nur der ersten Transportfläche schliess- und offenbar ist, während das ausgabeseitige Ende der zweiten Transportfläche permanent offen bleibt.

Die weitere Transportfläche braucht nicht unbedingt oberhalb der Schliesseinheit 5 angeordnet zu sein, sondern sie kann sich je nach den Platzverhältnissen auch anderswo z.B. auch seitlich der Maschine befinden.

Je nachdem, wo die Abgabestelle der zweiten Transportfläche angeordnet ist, kann es erforderlich sein, dass die Handhabungsvorrichtung mit einer Schwenkachse versehen wird. Befinden sich z.B. die Abgabestellen der beiden Transportflächen nebeneinander, so sind beide bedienbar, indem beispielsweise die Handhabungsvorrichtung 10 gemäss Fig. 1 für eine Schwenkung des Handhabungsgerätes 11 um die Y-Achse (B-Schwenkachse) ausgelegt wird. Weiters wird das Handhabungsgerät 11 so ausgelegt, dass es mindestens zwei Fertigungsteile aufnehmen kann.

Analog wie bei der ersten Transportfläche können bei der zweiten Transportfläche Fördermittel vorgesehen sein, um Fertigungsteile von der Abgabestelle wegzubefördern.

Ein möglicher Verfahrensablauf zur Entnahme von zwei Arten an Fertigungsteilen ist z.B. wie folgt: Das Handhabungsgerät nimmt ein Spritzgussteil und den davon abgetrennten Anguss auf und wird dann so bewegt, dass das Spritzgussteil auf der ersten Transportfläche und der Anguss auf der zweiten Transportfläche abgelegt werden können. Spritzgussteil und Anguss werden dann zur Ausgabestelle der ersten bzw. zweiten Transportfläche separat voneinander transportiert.

Anschliessend zur zweiten Transportfläche kann z.B. eine Mühle angeordnet sind, in welchem der Anguss zerkleinert wird, um ihn wieder in die Einspritzeinheit einspeisen zu können.

Die Handhabungsvorrichtung 10 braucht nicht unbedingt, so wie bei dem hier gezeigten Ausführungsbeispiel dargestellt, zwischen der Form der Schliesseinheit 5 und der Einspritzeinheit 1 angeordnet zu sein. Unter Umständen ist der Bereich je nach Auslegung der Maschine bereits belegt, z.B. bei einer Zweikomponenten-Spritzgussmaschine. In diesem Fall kann die Handhabungsvorrichtung 10 beispielsweise anschliessend zum Ende der Schliesseinheit 5 angeordnet werden, indem sie z.B. in Bezug auf die in Fig. 1 gezeigte Ausrichtung um 180 Grad gedreht und auf einer Konsole oder drgl. am Maschinenbett 2 befestigt wird.

Entnahmevorrichtung und Transportfläche(n) sind so auslegbar, dass eine bestehende Maschine damit nachgerüstet werden kann.

## Patentansprüche

1. Anordnung mit einer Entnahmevorrichtung (10) zur Entnahme von Fertigungsteilen aus einer Maschine zum Spritzgiessen, welche eine Schliesseinheit (5) aufweist, wobei die Entnahmevorrichtung ein Handhabungsgerät (11) umfasst, mittels welchem mindestens ein Fertigungsteil aus der geöffneten Form der Schliesseinheit entnehmbar und an eine Abgabestelle (40a) einer Transportfläche (40) überführbar ist, auf welcher das Fertigungsteil von der Abgabestelle zu einer Ausgabestelle (40b) transportierbar ist, **dadurch gekennzeichnet, dass** die Transportfläche (40) oberhalb der Schliesseinheit (5) und in der Längsrichtung (X) der Maschine verläuft, in welcher die Form schliess- und offenbar ist.

2. Anordnung nach Anspruch 1, wobei die Entnahmevorrichtung (10) mindestens eines der folgenden Merkmale A-E aufweist:
A) sie weist zum Verfahren des Handhabungsgerätes (11) weniger als drei Linearachsen (X, Y) auf,
B) sie weist zum Verfahren des Handhabungsgerätes (11) genau zwei Linearachsen (X, Y) auf, die vorzugsweise motorbetrieben sind,
C) sie ist eingerichtet, das Handhabungsgerät (11) ausschliesslich in einer Ebene zu bewegen, zu welcher vorzugsweise die Längsrichtung (X) parallel angeordnet ist,
D) sie weist einen in der Längsrichtung (X) verfahrbaren Schlitten (16) auf, an welchem eine Linearführung (25) für das Handhabungsgerät (11) gehalten ist,
E) sie weist zum Verschwenken des Handhabungsgeräts (11) mindestens eine Schwenkachse (C) auf, welche vorzugsweise quer zur Längsrichtung (X) angeordnet ist.

3. Anordnung nach einem der vorangehenden Ansprüche, wobei die Entnahmevorrichtung (10) an der Maschine an einer Befestigungsstelle befestigt ist, welche mindestens eines der folgende Merkmale a-d aufweist:
a) die Befestigungsstelle ist zwischen der Form der Schliesseinheit (5) und der Einspritzeinheit (1) angeordnet,
b) an der Befestigungsstelle ist eine Säule (19) der Entnahmevorrichtung (10) befestigt,
c) die Befestigungsstelle befindet sich an der Düsenplatte (5a) der Schliesseinheit (5)
d) die Befestigungsstelle befindet sich anschliessend an das Ende der Schliesseinheit (5).

4. Anordnung nach einem der vorangehenden Ansprüche, welche zur Bildung der Transportfläche eine Rutsche (40) und/oder ein Transportband umfasst.

5. Anordnung nach einem der vorangehenden Ansprüche, welche Befestigungsmittel (45) zum Befestigen der Transportfläche (40) an der Maschine aufweist, wobei die Befestigungsmittel Magnete (45a) enthält und/oder eingerichtet sind, die Neigung der Transportfläche (40) in der Längsrichtung (X) und/oder quer dazu einzustellen.

6. Anordnung nach einem der vorangehenden Ansprüche, wobei die Transportfläche (40) an der Schutzbehausung (6) der Maschine befestigt ist, insbesondere an einer verschiebbaren Schutzhaube (6b) zum Abdecken und Freigeben der Schliesseinheit (5).

7. Anordnung nach einem der vorangehenden Ansprüche, wobei die Transportfläche Fördermittel (48) zur Erzeugung eines Luftstroms und/oder eines mechanischen Stosses und/oder zur Erzeugung von Vibrationen aufweist, um ein Fertigungsteil von der Abgabestelle (40a) wegzubefördern.

8. Anordnung nach einem der vorangehenden Ansprüche, wobei die Transportfläche an der Ausgabestelle (40a) eine Abräumklappe (40c) aufweist, um eine Anzahl Fertigungsteile auflaufen zu lassen, bevor sie entfernt werden.

9. Anordnung nach einem der vorangehenden Ansprüche, welche mindestens eines der folgenden Merkmale M1-M4 aufweist:
M1) das Handhabungsgerät (11) weist einen Greifer und/oder einen Sauger auf,
M2) das Handhabungsgerät (11) ist eingerichtet zur Aufnahme eines ersten Fertigungsteils einer ersten Art, insbesondere eines Spritzgussteils, und mindestens eines zweiten Fertigungsteils einer zweiten Art, insbesondere eines Angusses,
M3) es ist mindestens eine zweite Transportfläche zum Transport eines Fertigungsteils von einer zweiten Abgabestelle zu einer zweiten Ausgabestelle vorgesehen, wobei auf der Abgabestelle (40a) der ersten Transportfläche (40) ein Fertigungsteil der ersten Art und auf der zweiten Abgabestelle ein Fertigungsteil der zweiten Art ablegbar und getrennt voneinander auf der jeweiligen Transportfläche transportierbar sind,
M4) es ist mindestens eine zweite Transportfläche zum Transport eines Fertigungsteils von einer zweiten Abgabestelle zu einer zweiten Ausgabestelle vorgesehen, wobei die zweite Transportfläche oberhalb der Schliesseinheit (5) und in der Längsrichtung (X) der Maschine verläuft.

10. Verfahren zur Entnahme von Fertigungsteilen aus einer Maschine zum Spritzgiessen, wobei jeweils mindestens ein Fertigungsteil aus der geöffneten Form der Schliesseinheit (5) entnommen und auf eine Abgabestelle (40a) mindestens einer Transportfläche (40) abgelegt wird, welche auf einem höheren Niveau als die Form angeordnet ist und auf welcher das Fertigungsteil von der Abgabestelle (40a) zu einer Ausgabestelle (40b) transportiert wird, wobei die Transportfläche oberhalb der Schliesseinheit (5) und in der Längsrichtung (X) der Maschine verläuft, in welcher die Form schliess- und offenbar ist.

11. Verfahren nach Anspruch 10, wobei sich die Bewegungsbahn, auf welcher das Fertigungsteil von der Entnahme aus der Form bis zur Abgabe auf der Transportfläche (40) bewegt wird, ausschliesslich aus Linearbewegungen, die in einer Ebene liegen, und gegebenenfalls Schwenkbewegungen zusammensetzt, die vorzugsweise quer zur Längsrichtung (X) erfolgen.

12. Verfahren nach Anspruch 10 oder 11, wobei mindestens zwei Fertigungsteile aus der geöffneten Form der Schliesseinheit (5) entnommen und das eine Fertigungsteil auf der Abgabestelle (40a) der ersten Transportfläche (40) und das andere Fertigungsteil auf einer zweiten Abgabestelle einer zweiten Transportfläche abgelegt werden, wobei die beiden Fertigungsteile getrennt voneinander von der jeweiligen Abgabestelle (40a) zu der Ausgabestelle (40b) bzw. einer zweiten Ausgabestelle der zweiten Transportfläche transportiert werden.

13. Verfahren nach einem der Ansprüche 10-12, bei welchem eine Anordnung nach einem der Ansprüche 1-9 verwendet wird.

14. Verfahren zum Nachrüsten einer Maschine zum Spritzgiessen, bei welchem eine Entnahmevorrichtung (10) und mindestens eine Transportfläche (40) so angeordnet werden, dass eine Anordnung nach einem der Ansprüche 1-9 gebildet wird.
